# EUROPEAN PATENT SPECIFICATION

(11) **EP 0 700 800 B1**
(45) Date of publication and mention of the grant of the patent: **07.01.1999**
(21) Application number: 95113930.2
(22) Date of filing: 05.09.1995
(51) Int. Cl.: B60G 17/052

(54) **Apparatus for preventing the creation of an underpressure in vehicle air-suspension bellows**
Vorrichtung zur Vermeidung einer Unterdruckbildung in Luftfederbalgen von Fahrzeugen
Dispositif pour empêcher la création d'une pression négative dans le soufflet d'une suspension pneumatique de véhicule

(30) Priority: 07.09.1994 DE 4431806
(43) Date of publication of application: 13.03.1996
(73) Proprietor: IVECO MAGIRUS AG, D-89079 Ulm (DE)
(72) Inventor: Stürner, Johann, D-89079 Ulm (DE)
(74) Representative: Boggio, Luigi

(56) References cited:
- FR-A- 1 323 561
- FR-A- 2 554 061
- US-A- 1 344 334
- US-A- 2 862 725
- US-A- 3 186 730
- PATENT ABSTRACTS OF JAPAN vol. 007 no. 009 (M-185) ,14 January 1983 & JP-A-57 167811 (ATSUGI JIDOUSHIYA BUHIN KK) 15 October 1982,

## Description

The present invention relates to an apparatus for preventing the creation of an underpressure in the air-suspension bellows of vehicles, having a pneumatic control device for the air supply to the air-suspension bellows and a duct system between the control device and the air-suspension bellows.

Under certain conditions, an underpressure may occur in the air-suspension bellows of vehicles, in particular commercial vehicles. For example, this applies to so-called lift axles which are raised when the vehicle is travelling in an unladen condition. An underpressure in the air-suspension bellows may even occur during installation, since the air-suspension unit is not yet ready for operation. When raising the chassis of a vehicle an underpressure may occur in the bellows of the lift axle in vehicles with traction control as a result of delays in the pressure control valve. If leaks occur in the raising device after a long idle period, the raised lift axle descends unintentionally and, since all systems are inoperative, an underpressure is created in the air bellows.

The underpressure, which occurs in this and other instances, results in contraction of the bellows and thus causes damage thereto or even destruction thereof.

The object of the invention is to devise an apparatus of the above-mentioned type which, with simple means, makes it possible to prevent the creation of an underpressure in the air-suspension bellows.

According to the invention, this object is achieved in that a non-return valve is incorporated into the duct system and is arranged in such a way that when the pressure in the duct system falls below a predetermined underpressure ambient air enters the duct system through the non-return valve.

The non-return valve has a low opening pressure so as to provide lasting protection against the creation of an underpressure in the air-suspension bellows.

In normal operation the non-return valve is kept closed by the control pressure of the control device.

Preferably, a tee is provided in the duct system, from which extends a branch duct, at the end of which the non-return valve is provided.

The manner in which this object is achieved in accordance with the invention is very simple and does not require any complicated pneumatic or electropneumatic circuits. It is alway ready to operate, even in vehicles which are inoperative for a long period.

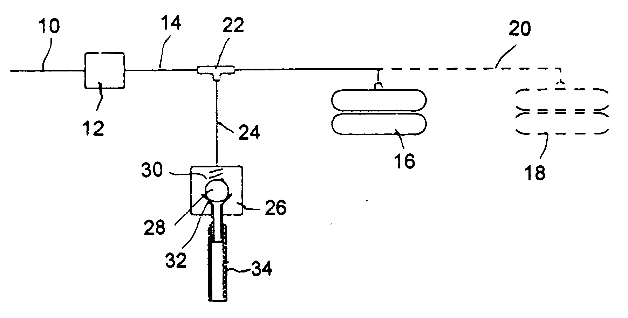

Preferred examples of embodiment of the invention will be illustrated in more detail below with reference to the accompanying drawing.

The single Figure is a schematic connection diagram of an apparatus according to the invention.

According to the invention, air pressure from a compressed-air supply (not shown) enters via a duct 10 into a control device 12, which substantially takes the form of a pressure control valve, solenoid valve, etc. A connecting duct 14 extends from the control device 12 to an air-suspension bellows 16, illustrated by way of example. Another air-suspension bellows 18, indicated in dashed line, is connected in parallel to the air-suspension bellows 16 via an intermediate duct 20 also indicated in dashed line. In principle, any number of air-suspension bellows 16,18 desired can supplied by the control device 12.

A tee 22, from which extends a branch duct 24, is inserted into the connecting duct 14. In this way the two sections of the connecting duct 14 separated by the tee 22 and the branch duct 24 are in communication with one another. A non-return valve 26 is mounted at the end of the branch duct 24. A ball valve 28, which is retained on a valve seat 32 by a relatively weak spring 30, is disposed in the non-return valve 26. A protecting tube 34, which is open at its end and which establishes a connection with the atmosphere, extends from the valve seat.

As soon as an underpressure is created in the air-suspension bellows 16 or 18, which can be predetermined by the choice of spring 30, the ball 28 is lifted from the valve seat 32 so that atmospheric air can subsequently flow. When the underpressure has been eliminated, the valve is automatically closed again by the spring.

Otherwise, the non-return valve remains constantly closed when, during normal operation, compressed air is admitted through the control device 12.

## Claims

1. An apparatus for preventing the creation of an underpressure in the air-suspension bellows of vehicles, having a pneumatic control device (12) for the air supply to the air-suspension bellows (16,18) and a duct system (14,20,24) between the control device and the air-suspension bellows, characterised in that a non-return valve (26) is incorporated into the duct system (14,20,24) and is arranged in such a way that when a predetermined value of underpressure is exceeded in the duct system ambient air enters the duct system through the non-return valve.

2. An apparatus according to Claim 1, characterized in that a tee (22), to the free outlet of which the non-return valve (26) is connected, is inserted into a connecting duct (14,20) of the duct system, which connects the control device (12) with the air-suspension bellows (16,18).

## Patentansprüche

1. Vorrichtung zur Vermeidung einer Unterdruckbildung in Luftfederbälgen von Fahrzeugen, mit einem pneumatischen Steuergerät (12) für die Luftzufuhr zu den Luftfederbälgen (16,18) und einem Leitungssystem (14,20,24) zwischen dem Steuergerät und den Luftfederbälgen, dadurch gekennzeichnet, daß in das Leitungssystem (14,20,24) ein Rückschlagventil (26) eingefügt ist, das derart angeordnet ist, daß bei Überschreitung eines vorgegebenen Unterdrucks in dem Leitungssystem Umgebungsluft durch das Rückschlagventil in das Leitungssystem eintritt.

2. Vorrichtung nach Anspruch 1, dadurch gekennzeichnet, daß in eine Verbindungsleitung (14,20) des Leitungssystems, die das Steuergerät (12) mit den Luftfederbälgen (16,18) verbindet, ein T-Stück (22) eingesetzt ist, an dessen freien Ausgang das Rückschlagventil (26) angeschlossen ist.

## Revendications

1. Dispositif pour empêcher la création d'une pression négative dans le soufflet d'une suspension pneumatique de véhicules, comportant un dispositif de commande pneumatique (12) pour l'alimentation d'air du soufflet de suspension pneumatique (16, 18), et un système de conduits (14, 20, 24) entre le dispositif de commande et le soufflet de suspension pneumatique,
caractérisé en ce qu'
un clapet anti-retour (26) est incorporé dans le système de conduits (14, 20, 24) et monté de telle manière que, lorsqu'une valeur prédéterminée de pression négative est dépassée dans le système de conduits, de l'air atmosphérique ambiant pénètre dans le système de conduits par le clapet anti-retour.

2. Dispositif selon la revendication 1,
caractérisé en ce qu'
un té (22) à la sortie libre duquel est branché le clapet anti-retour (26), est introduit dans un conduit de liaison (14, 20) du système de conduits, ce conduit de liaison reliant le dispositif de commande (12) au soufflet de suspension pneumatique (16, 18).
